# EUROPEAN PATENT SPECIFICATION

(11) **EP 1 344 634 B1**
(45) Date of publication and mention of the grant of the patent: **09.11.2011**
(21) Application number: 03005244.3
(22) Date of filing: 10.03.2003
(51) Int. Cl.: B29C 70/44, B29C 70/34

(54) **Method of molding a helicopter rotor blade**
Verfahren zur Herstellung eines Hubschrauberrotorblattes
Procédé pour la fabrication d'une pale de rotor d'hélicoptère

(30) Priority: 12.03.2002 IT TO20020213
(43) Date of publication of application: 17.09.2003
(73) Proprietor: AGUSTAWESTLAND S.p.A., 21017 Samarate (Varese) (IT)
(72) Inventor: Pancotti, Santino, 21013 Gallarate (IT)
(74) Representative: Cerbaro, Elena

(56) References cited:
- FR-A- 2 562 834
- US-A- 4 698 011
- US-A1- 2001 008 659

## Description

The present invention relates to a method of molding a helicopter rotor blade.

Metal helicopter rotor blades made by conventional machining and forming, such as extrusion, milling, etc., are known.

Though widely used in helicopter rotor fabrication, metal is not altogether satisfactory by being structurally unreliable. That is, the time lapse between crack formation and actual failure of a metal component is normally fairly short, with all the negative consequences this entails.

A need is therefore felt within the industry for rotor blades made of composite materials, which, besides having a lighter specific weight than metal, are structurally more reliable, i.e. allow of a relatively long time lapse between crack formation and failure, thus enabling any defects to be detected more easily.

FR-A-2562834 discloses a method as defined in the preamble of claim 1 and used for aircrafts parts. US 4,698,011 discloses a moulding technique for helicopter blades, where a mandrel is expanded to force impregnated fibrous material against the surfaces of a female mould.

It is an object of the present invention to provide a straightforward, low-cost method of molding helicopter rotor blades which are structurally more reliable and lighter than known metal blades.

According to the present invention, there is provided a method of molding a blade for a helicopter rotor, as claimed in claim 1.

A preferred, non-limiting embodiment of the present invention will be described by way of example with reference to the accompanying drawings, in which:
Figure 1 shows a side view of a ducted helicopter tail rotor having a number of blades of composite material made using the molding method according to the present invention;
Figure 2 shows a larger-scale front view of a rotor blade;
Figure 3 shows a longitudinal section of a device for producing a rubber matrix for molding the inner profile of the rotor blade;
Figure 4 shows a first side view of the bag matrix produced by the Figure 3 device;
Figure 5 shows a second side view of the Figure 4 bag matrix fitted to a mandrel and covered with a number of layers of composite material eventually forming the inner longitudinal member of the rotor blade;
Figure 6 shows a larger-scale section along line VI-VI in Figure 5;
Figure 7 shows a greatly enlarged detail of Figure 6;
Figure 8 shows a cross section of the complete body of a rotor blade formed on the Figure 5 bag matrix and in course of polymerization inside a relative mold.

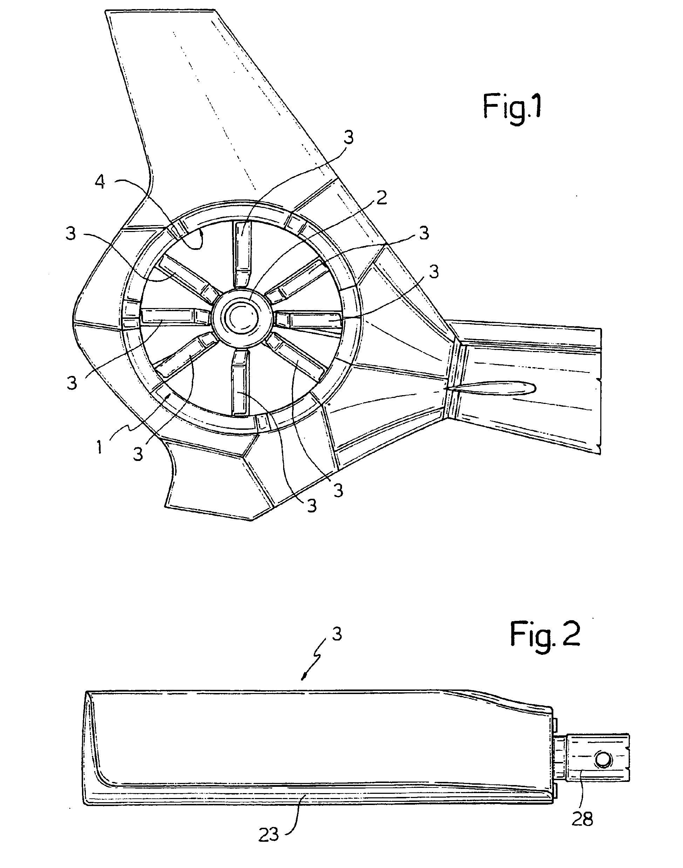

Number 1 in Figure 1 indicates as a whole a ducted tail rotor of a helicopter (shown only partly), which substantially comprises a hub 2, and a number of blades 3 fixed to and projecting radially from hub 2, and rotating inside a through seat 4 formed in the tail of the helicopter.

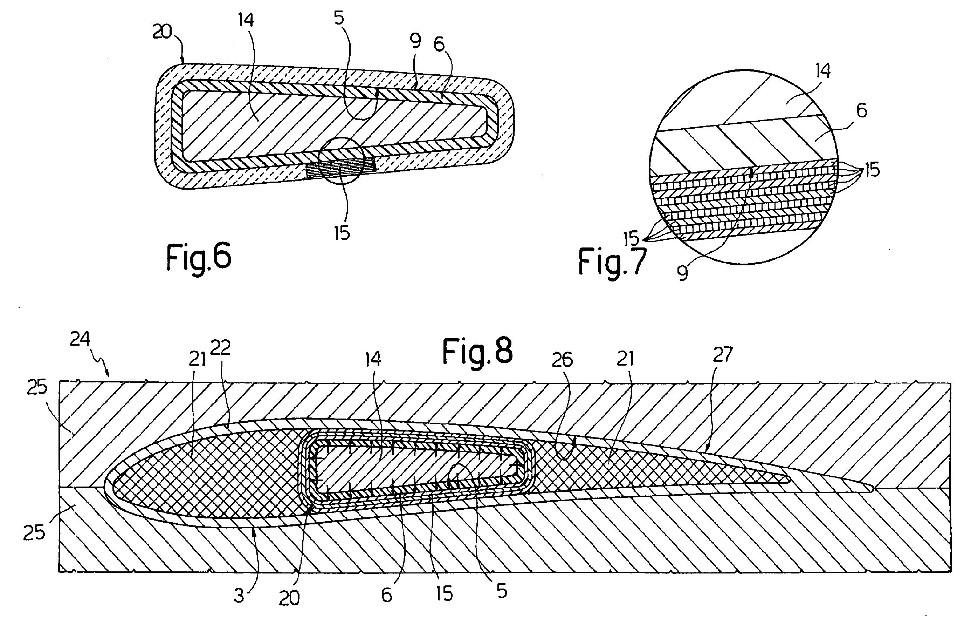

Each blade 3 defines an inner cavity 5 (Figures 6 and 8), and is made of composite material using the molding method according to the present invention.

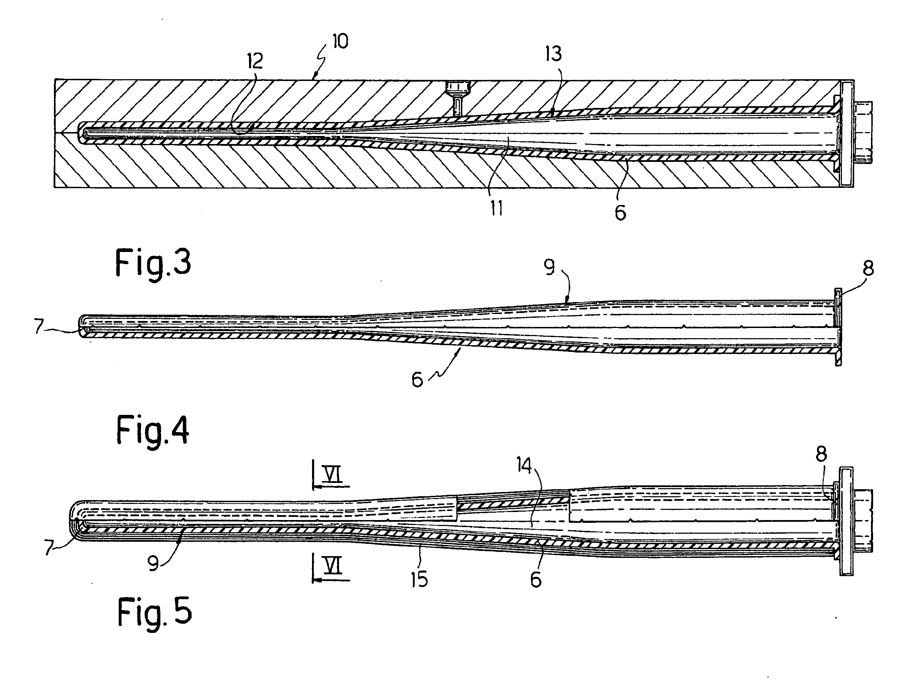

More specifically, to form the surface bounding cavity 5 of blade 3, the method employs a bag matrix 6 (Figures 4, 5, 6 and 8) made of heat-expandable material, preferably silicone rubber.

Bag matrix 6 is of substantially tubular elongated shape, closed at one end 7, and has an outer radial flange 8 at the opposite end.

More specifically, bag matrix 6 is bounded by an outer surface 9 complementary in shape to that of the surface bounding cavity 5 of blade 3 to be molded.

In the example shown, bag matrix 6 has a cylindrical section tapering from end flange 8 towards the opposite end 7 so as to assume a substantially "flattened" rectangular shape with rounded edges (Figures 6 and 8).

Bag matrix 6 is formed by injecting liquid silicone rubber onto a metal core 11 (Figure 3) inside a mold 10.

More specifically, mold 10 defines a molding cavity 12 open outwards on one side, so that core 11 can be inserted inside mold 10 and removed once bag matrix 6 is set.

Together with cavity 12 of mold 10 into which it is inserted, core 11 defines a chamber 13 of the same shape as the required bag matrix 6, and which is connected to a liquid silicone rubber injection unit (not shown).

Once formed, bag matrix 6 is fitted, with the interposition of a release agent, to a rigid mandrel 14, and is covered, in a predetermined sequence, with a first number of layers 15 of composite material fabric - in the example shown, layers of glass fabric and graphite fabric.

More specifically, at this step, at predetermined intervals and for a predetermined length of time - in the example shown, five minutes - the layers 15 already applied to bag matrix 6 are compacted by winding them with strips of rubber.

In this way, the core or longitudinal member 20 of blade 3 is formed.

After being coated with a layer of adhesive, the portions of longitudinal member 20 eventually forming the leading and trailing edges of blade 3 are fitted with respective fillers 21, preferably made of material known by the trade name Rohacell (RTM).

The assembly is then enclosed in a second number of layers 22 of composite material fabric - again layers of glass fabric and graphite fabric - to form the skin of blade 3; and the root portion of blade 3 is fitted with metal structural elements or ribs 23.

The assembly so formed is then inserted inside a mold 24 for polymerization (Figure 8). More specifically, mold 24 is defined by two half-molds which fit together into a closed position defining a closed chamber 26 housing the assembly for polymerization.

Chamber 26 of mold 24 is bounded by a molding surface 27 complementary in shape to the outer surface of blade 3 for molding.

Closure of half-molds 25 of mold 24 compresses layers 15 and 22 and fillers 21 on matrix 6 and mandrel 14.

The inside of chamber 26 of mold 24 is maintained for 60 to 120 minutes at a temperature ranging from 125°C to 135°C and sufficient to polymerize layers 15, 22 and bond the component parts of blade 3. The above temperatures also expand silicone rubber bag matrix 6, which thus defines a base on which to compact the material of blade 3 compressed by molding surface 27 of mold 24 against bag matrix 6.

Polymerization completed, the inside of chamber 26 of mold 24 is restored to ambient temperature, and bag matrix 6 contracts on mandrel 14, so that both can be withdrawn easily from cavity 5 of blade 3.

An abrasion strip (not shown) is then applied in known manner to the skin of blade 3.

Blade 3 is then completed by fitting longitudinal member 20, e.g. by means of adhesive, with a sleeve 28 projecting outwards and defining a fastening portion by which to fasten blade 3 to hub 2.

The advantages of the molding method according to the present invention will be clear from the foregoing description.

In particular, using a bag matrix 6 of heat-expandable material to mold blade 3 provides a base on which to compact the material of blade 3 during polymerization without impairing withdrawal of bag matrix 6 from the finished part. That is, as temperature increases, the expanded bag matrix 6 defines a stop surface on which the materials covering it are compacted by compression exerted by mold 24; whereas, at ambient temperature, contraction of bag matrix 6 to the nonexpanded configuration permits smooth withdrawal of mandrel 14 together with bag matrix 6 from the finished part.

Clearly, changes may be made to the molding method as described and illustrated herein without, however, departing from the scope of the accompanying Claims.

## Claims

1. A method of molding a blade (3)
, comprising the steps of:
- making a bag matrix (6) of heat-expandable material;
- inserting a rigid mandrel (14) inside said bag matrix (6);
- covering said bag matrix (6) with a number of layers (15, 21, 22) of composite material of predetermined type;
- placing the assembly so formed inside a chamber (26) of a mold (24) bounded by a molding surface (27); and
- bringing said assembly to a sufficient temperature to expand said bag matrix (6) and polymerize said layers (15, 21, 22) of composite material compacted between the expanded said bag matrix (6) and said molding surface (27) of said mold (24);
**Characterized in that** the blade is a helicopter rotor (1) and said bag matrix (6) is manufactured by injection molding.

2. A method as claimed in Claim 1, wherein said bag matrix is made of silicone rubber.

3. A method as claimed in Claim 1 or 2, wherein said step of covering said bag matrix (6) is performed by:
- applying a first number of layers of composite material fabric (15) defining a core (20) of said blade (3) ;
- applying filler material (21) to said first number of layers of composite material fabric (15); and
- enclosing the whole in a second number of layers of composite material fabric (22) defining the skin of said blade (3).

4. A method as claimed in Claim 3, wherein said first and said second number of layers of composite material fabric (15, 22) comprise layers of graphite fabric.

5. A method as claimed in Claim 3 or 4, wherein said first and said second number of layers of composite material fabric (15, 22) comprise layers of glass fabric.

6. A method as claimed in any one of the foregoing Claims, wherein said temperature ranges between 125° and 135°C.

## Patentansprüche

1. Verfahren zum Gießen eines Blatts (3), das die folgenden Schritte umfasst:
- Herstellen einer Sackmatrize (6) aus einem wärmeausdehnbaren Material;
- Einsetzen eines starren Dorns (14) in die Sackmatrize (6);
- Abdecken der Sackmatrize (6) mit zahlreichen Lagen (15, 21, 22) aus Verbundmaterial eines vorgegebenen Typs;
- Anordnen der so gebildeten Gesamtheit in einer Kammer (26) einer Gießform (24), die durch eine Gießformoberfläche (27) begrenzt ist; und
- Bringen der Gesamtheit auf eine ausreichende Temperatur, um die Sackmatrize (6) zu expandieren und um die Lagen (15, 21, 22) aus Verbundmaterial, die zwischen der expandierten Sackmatrize (6) und der Gießformoberfläche (27) der Gießform (24) komprimiert werden, zu polymerisieren;
**dadurch gekennzeichnet, dass** das Blatt ein Helikopter-Rotor (1) ist und dass die Sackmatrize (6) durch Spritzguss hergestellt wird.

2. Verfahren nach Anspruch 1, wobei die Sackmatrize aus Silikongummi hergestellt wird.

3. Verfahren nach Anspruch 1 oder 2, wobei der Schritt des Abdeckens der Sackmatrize (6) ausgeführt wird durch:
- Aufbringen einer ersten Anzahl von Lagen aus Verbundwerkstoff (15), die einen Kern (20) des Blatts (3) definieren;
- Aufbringen eines Füllstoffmaterials (21) auf die erste Anzahl von Lagen aus Verbundwerkstoff (15); und
- Einschließen der Gesamtheit in einer zweiten Anzahl von Lagen aus Verbundwerkstoff (22), die die Haut des Blatts (3) definieren.

4. Verfahren nach Anspruch 3, wobei die erste und die zweite Anzahl von Lagen aus Verbundwerkstoff (15, 22) Lagen aus Graphitwerkstoff enthalten.

5. Verfahren nach Anspruch 3 oder 4, wobei die erste und die zweite Anzahl von Lagen aus Verbundwerkstoff (15, 22) Lagen aus Glasgewebe enthalten.

6. Verfahren nach einem der vorhergehenden Ansprüche, wobei die Temperatur im Bereich von 125 bis 135 °C liegt.

## Revendications

1. Procédé de moulage d'une pale (3) comprenant les étapes consistant à :
- fabriquer une matrice sac (6) en matière dilatable par la chaleur ;
- introduire un mandrin rigide (14) dans la matrice sac (6) ;
- recouvrir ladite matrice sac (6) d'un certain nombre de couches (15, 21, 22) d'une matière composite d'un type prédéterminé ;
- placer l'ensemble ainsi formé dans une chambre (26) d'un moule (24) limitée par une surface de moulage (27) ; et
- porter ledit ensemble à une température suffisante pour dilater ladite matrice sac (6) et polymériser lesdites couches (15, 21, 22) de matière composite comprimées entre ladite matrice sac dilatée (6) et ladite surface de moulage (27) dudit moule (24) ;
**caractérisé en ce que** la pale est un rotor d'hélicoptère (1) et ladite matrice sac (6) est fabriquée par moulage par injection.

2. Procédé selon la revendication 1, dans lequel ladite matrice sac est faite de caoutchouc de silicone.

3. Procédé selon la revendication 1 ou 2, dans lequel ladite étape de recouvrement de ladite matrice sac (6) s'effectue :
- en appliquant un premier nombre de couches de tissu de matière composite (15) définissant un noyau (20) de ladite pale (3) ;
- en appliquant une matière de charge (21) audit premier nombre de couches de tissu de matière composite (15) ; et
- en enfermant le tout dans un second nombre de couches de tissu de matière composite (22) définissant la peau de ladite pale (3).

4. Procédé selon la revendication 3, dans lequel lesdits premier et second nombres de couches de tissu de matière composite (15, 22) comprennent des couches de tissu de graphite.

5. Procédé selon la revendication 3 ou 4, dans lequel lesdits premier et second nombres de couches de tissu de matière composite (15, 22) comprennent des couches de tissu de verre.

6. Procédé selon une quelconque des revendications précédentes, dans lequel ladite température est comprise entre 125° et 135°C.
